# EUROPEAN PATENT APPLICATION

(11) **EP 1 724 241 A1**
(43) Date of publication of application: **22.11.2006**
(21) Application number: 05720281.4
(22) Date of filing: 08.03.2005
(51) Int. Cl.: C03B 18/04

(54) **METHOD AND DEVICE FOR MANUFACTURING FLOAT PLATE GLASS**

(30) Priority: 11.03.2004 JP 2004068557
(71) Applicant: Asahi Glass Company, Limited, Chiyoda-ku, Tokyo 100-8405 (JP)
(72) Inventor: IGA, Motoichi, c/o Asahi Glass Company, Ltd., Yokohama-shi, Kanagawa 2300045 (JP); INOUE, Atsushi, c/o Asahi Glass Company, Ltd., Yokohama-shi, Kanagawa 2300045 (JP); KAKIMOTO, Yasuhiro, c/o Asahi Glass Company, Ltd., Yokohama-shi, Kanagawa 2300045 (JP); KAMIHORI, Toru, c/o Asahi Glass Company, Ltd., Yokohama-shi, Kanagawa 2300045 (JP); TAKIGUCHI, Tetsushi, c/o Asahi Glass Company, Ltd., Yokohama-shi, Kanagawa 2300045 (JP)
(74) Representative: Müller-Boré & Partner Patentanwälte
(86) International application number: PCT/JP2005/004009
(87) International publication number: WO 2005/087672

(57) **Abstract**

It is an object of the present invention to provide a method for manufacturing float glass and a device therefor, which are capable of stably holding both edges of a molten glass ribbon.

In accordance with gutter-like bodies 12 of a device for manufacturing float glass 10, a portion of molten tin 16 that flows out of outlets 32 of lateral ducts 34 of the gutter-like bodies 12 into vessel edge areas 14A can be directed to a vessel central area 14B through vertical ducts 30 and through holes 36. Since the flow rate q1 of the molten tin 16 that flows from each of the vessel edge areas 14A into each of the inlets 28, and the flow rate q2 of the molten tin 16 that flows from the vessel central area 14B into each of the inlets 28 are substantially equalized along the forward direction of the molten glass ribbon 20. Accordingly, recessed portions 26 are substantially uniformly formed on a bath surface 24 in such an appropriate shape to hold the edges along the forward direction of the molten glass ribbon 20, with the result that the edges 22 can be stably held in the recessed portions 26, making it possible to obtain a stable glass quality.

## Description

### TECHNICAL FIELD

The present invention relates to a method for manufacturing float glass by the float process and a device therefor, which are characterized by holding both edges of a molten glass ribbon supplied on a molten metal bath surface.

### BACKGROUND ART

A device for manufacturing flat glass by the float process is a device, wherein molten glass is continuously supplied on molten metal, such as molten tin, contained in a vessel, the supplied molten glass is caused to float and move forward on the molten tin, and a glass ribbon comprising the molten glass, which has achieved the equilibrium thickness at that time or is gradually achieving the equilibrium thickness, is pulled toward the outlet of the molten tin bath, i.e., a lehr (downstream annealing zone) disposed adjacent the outlet of the molten tin bath to manufacture flat glass having a certain width. In such a device for manufacturing flat glass by the float process, the molten glass ribbon, which has achieved the equilibrium thickness or is gradually achieving the equilibrium thickness on the molten tin, not only is pulled downstream but also has upper sides of both edge portions stretched in the width direction thereof by rotating top rollers, with the result that flat glass is manufactured to have a smaller thickness than the equilibrium thickness.

The device for manufacturing flat glass by use of such top rollers has a problem in that undulations are caused on a glass surface during the stretching operation by the top rollers. From this point of view, there has been proposed a device for manufacturing flat glass without using such top rollers, wherein the bath level of the molten tin in the vicinity of both edges of a molten glass ribbon in its width direction is set to be lower or higher than the bath level of the molten tin around both edges to prevent the molten glass ribbon from narrowing or spreading in the width direction in order to hold both edges (e.g., Patent Document 1).

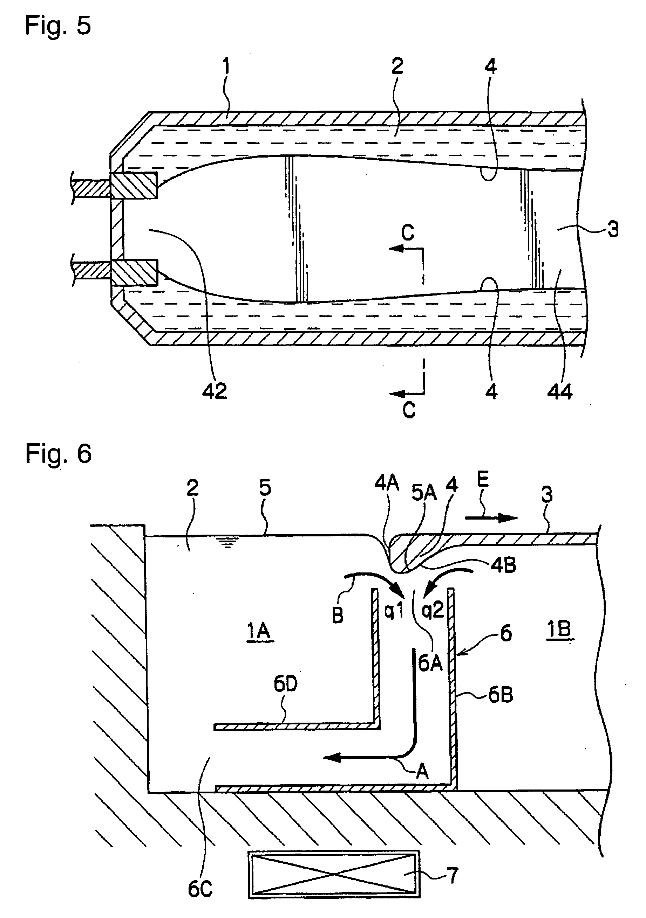

In Fig. 5 and Fig. 6 is shown a conventional example of the device for manufacturing flat glass, which holds both edges.

In the plan view shown in Fig. 5, a molten glass ribbon 3 is flowing on molten tin 2 contained in a vessel 1, being pulled toward a lehr (in the right direction in Fig. 5). The molten glass ribbon 3 is about to achieve the equilibrium thickness by having both edges 4 and 4 narrowed or spread in the width direction of the molten glass ribbon 3 in a high temperature zone of the molten tin bath. The edge holding operation will be described about a case where the edges 4 of the molten glass ribbon 3 are narrowing in the width direction.

Fig. 6 is a cross-sectional view taken along line C-C of Fig. 5 and shows that a gutter-like body 6 having an L-character sectional shape is disposed along each of the edges 4 and 4 of the molten glass ribbon 3 in the molten tin 2 contained in the vessel 1. The gutter-like body 6 comprises a vertical duct 6B having an inlet 6A, and a lateral duct 6D having an outlet 6C. The vessel 1 has a linear motor 7 disposed under the lateral duct 6D of the gutter-like body 6 below a bottom portion thereof, so that the linear motor 7 applies a driving force (magnetic field) to the molten tin 2 in the gutter-like body 6 to flow the molten tin 2 in the direction indicated by an arrow A. Thus, the molten tin 2 in the gutter-like body is caused to flow in a direction substantially perpendicular (substantially vertical) to a bath surface 5 and toward the bottom of the vessel 1, with the result that a negative pressure is created under the corresponding edge of the molten glass ribbon 3 to lower a portion of the bath surface level of the molten tin 2 in the vicinity of the corresponding edge 4 in comparison with the other portion of the bath surface level of the molten tin 2 around the corresponding edge. The corresponding edge 4 of the molten glass ribbon 3 flows into a recessed portion 5A defined by a lowered portion of the bath surface 5, and the thickness of the edge 4 is made greater than that of a central portion of the molten glass ribbon 3. Each of the edges 4 of the molten glass ribbon 3 can be held in the recessed portion 5A to manufacture ribbon-shaped flat glass having a smaller thickness than the equilibrium thickness since the presence of the thickness deviation of the edge 4 avoids the generation of a force indicated by an arrow E, which causes the molten glass ribbon 3 to narrow based on surface tension.
Patent Document 1: JP-A-10-236832

### DISCLOSURE OF INVENTION

### Problems that the Invention is to Solve

Now, it is assumed, referring to Fig. 6, that the flow rate of the molten tin 2, which flows into the inlet 6A of the vertical duct 6B of the gutter-like body 6 from an area 1A in the vessel (vessel edge area) positioning outside the edge 4 of the molten glass ribbon 3, is q1, and that the flow rate of the molten tin 2, which flows into the inlet 6A of the vertical duct 6B of the gutter-like body 6 from an area 1B in the vessel (vessel central area) positioning inside the edge 4 of the molten glass ribbon 3, is q2. In the device for manufacturing flat glass, which is disclosed by Patent Document 1, the molten tin 2 flowing through the gutter-like body 6 has a dominant circulating path, which leads from the outlet 6C to the inlet 6A of the gutter-like body 6 as indicated by an arrow B in Fig. 6. The molten tin in the area 1B circulates from the area 1A through an upstream side 42 and a downstream side 44 (Fig. 5) of the gutter-like body 6. As a result, the flow rate q1 and the flow rate q2 along the forward direction of the molten glass ribbon 3 fail to be equalized each other, with the result that not only the recessed portion 5A of the bath surface 5 along the forward direction of the molten glass ribbon 3 fails to have an uniform shape but also the temperature distribution fails to be stable. This phenomenon has caused a problem in that it is impossible to hold the edge 4 in a stable way. Accordingly, it is difficult to provide flat glass with a stable thickness and a stable flatness.

The present invention has proposed in consideration of such a circumstance. It is an object of the present invention to provide a method for manufacturing float glass and a device therefor, which are capable of stably holding both edges of a molten glass ribbon.

### MEANS FOR SOLVING THE PROBLEM

In order to attain the above-mentioned object, according to a first aspect of the present invention, there is provided a method for manufacturing float glass, comprising continuously supplying molten glass on a bath surface of molten metal to form a molten glass ribbon, causing the molten glass ribbon to move forward to form flat glass having a target thickness, and sucking the molten metal in a substantially vertical direction along edges of the molten glass ribbon to form recessed portions on the bath surface, and carrying out the flat glass formation with the edges being flowed into and held in the recessed portions; the method further comprising carrying out the flat glass formation while a portion of the molten metal, which is sucked in the substantially vertical direction, is caused to flow out in directions outside and inside the edges of the molten glass ribbon.

In accordance with the first aspect of the present invention, both the flow rates of the molten metal, which is sucked from outside and inside each of the edges of the molten glass ribbon, are substantially equalized along the forward direction of the molten glass ribbon, allowing flat glass to be formed with the molten metal being sucked in the substantially vertical direction. Accordingly, the recessed portions are substantially uniformly formed on the bath surface of the molten metal along the forward direction of the molten glass ribbon in such an appropriate shape to hold the edges of the molten glass ribbon, with the result that the edges of the molten glass ribbon can be stably held in the recessed portions of the molten metal, making it possible to provide flat glass with a stable thickness and a stable flatness.

According to a second aspect of the present invention, the outflows of the molten metal in the directions outside and inside the edges of the molten glass ribbon are controlled so that the flow rates of the molten metal sucked from outside and inside the edges of the molten glass ribbon are substantially equalized in the recessed portions of the molten metal formed on the bath surface along the edges of the molten glass ribbon. Accordingly, the recessed portions are substantially uniformly and stably formed on the bath surface of the molten metal in such an appropriate shape to hold the edges along the forward direction of the molten glass ribbon, with the result that the edges can be stably held.

In order to attain the above-mentioned object, according to a third aspect of the present invention, there is provided a device for manufacturing float glass, wherein molten glass is continuously supplied on a bath surface of molten metal contained in a vessel to form a molten glass ribbon, and the molten glass ribbon is caused to move forward to form flat glass having a target thickness, comprising gutter-like bodies, which are disposed in the vessel, and each of which includes a vertical duct for sucking the molten metal in a substantially vertical direction along an edge of the molten glass ribbon, and a lateral duct for flowing out the molten metal sucked from the vertical duct, in a direction horizontally extending outside the edge of the molten glass ribbon; each of the gutter-like bodies having a circulation duct formed therein so that a portion of the molten metal that flows out of the lateral duct is directed in a direction remote from the lateral duct and inside the edge of the molten glass ribbon.

In accordance with the third aspect of the present invention, a portion of the molten metal, which has flowed out of the outlet of the lateral duct of each of the gutter-like bodies into an area in the vessel close to the lateral duct, is directed to an area in the vessel remote from the lateral duct through a circulation duct. In this way, the flow rate of the molten tin that flows into the inlet of each of the vertical ducts from the area in the vessel close to each of the lateral ducts with respect to each of the vertical ducts, and the flow rate of the molten tin that flows into the inlet of each of the vertical ducts from the area in the vessel remote from each of the lateral ducts with respect to each of the vertical ducts are balanced. In this way, both the flow rates are substantially equalized along the forward direction of the molten glass ribbon. Accordingly, the recessed portions are substantially uniformly formed on the bath surface along the forward direction of the molten glass ribbon in such an appropriate shape to hold the edges, with the result that the edges of the molten glass ribbon can be stably held in the recessed portions. Thus, it is possible to provide flat glass with a stable thickness and a stable flatness.

According to a fourth aspect of the present invention, the circulation duct formed in each of the gutter-like bodies is disposed at plural positions at certain intervals in a forward direction of the molten glass ribbon at least on an upstream side of the vessel. By disposing the plural circulation ducts in this way, both flow rates of the molten tin that flows into the inlet of each of the vertical ducts can be balanced in a substantially uniform way and in an optimal way over the entire length of the inlet.

According to a fourth aspect of the present invention, a control wall is disposed at at least one of a position between each of the gutter-like bodies and each of the lateral walls of the vessel and a position in the circulation duct in order to control the flow rate of the molten tin directed from an outlet of each of the lateral ducts to each of vessel edge areas of the vessel and the flow rate of the molten tin introduced into the circulation duct in the third or fourth aspect. By disposing the control wall in this way, it is possible to control the flow rates of the molten tin in both directions outside and inside each of the edges of the molten glass ribbon.

### EFFECT OF THE INVENTION

In accordance with the method for manufacturing float glass, according to the present invention, the molten metal is substantially vertically sucked so that both the flow rates of the molten metal, which is sucked from outside and inside each of the edges of the molten glass ribbon, are substantially equalized along the forward direction of the molten glass ribbon. Accordingly, the recessed portions are substantially uniformly formed on the bath surface of the molten metal along the forward direction of the molten glass ribbon in such an appropriate shape to hold the edges of the molten glass ribbon, with the result that the edges of the molten glass ribbon can be stably held in the recessed portions of the molten metal. Thus, it is possible to provide flat glass with a stable thickness and a stable flatness.

In accordance with the device for manufacturing flat glass, according to the present invention, a portion of the molten metal, which has flowed out of the outlet of the lateral duct of each of the gutter-like bodies into an area in the vessel close to the lateral duct, is directed to an area in the vessel remote from the lateral duct through a circulation duct. In this way, the flow rate of the molten tin that flows into the inlet of each of the vertical ducts from the area in the vessel close to each of the lateral ducts with respect to each of the vertical ducts, and the flow rate of the molten tin that flows into the inlet of each of the vertical ducts from the area in the vessel remote from each of the lateral ducts with respect to each of the vertical duct are substantially equalized. Accordingly, the recessed portions are substantially uniformly formed on the bath surface of the molten metal along the forward direction of the molten glass ribbon in such an appropriate shape to hold the edges, with the result that the edges can be stably held in the recessed portions. Thus, it is possible to provide flat glass with a stable thickness and a stable flatness.

### BRIEF DESCRIPTION OF DRAWINGS

Fig. 1 is a plan view showing the device for manufacturing flat glass, according to an embodiment;
Fig. 2 is a cross-sectional view of a gutter-like body taken along line F-F of Fig. 1;
Fig. 3 is a cross-sectional view of the gutter-like body taken along line G-G of Fig. 1;
Fig. 4 is an enlarged cross-sectional view of the gutter-like body shown in Fig. 2 and Fig. 3;
Fig. 5 is a plan view of a conventional device for manufacturing float glass; and
Fig. 6 is an enlarged cross-sectional view taken along line C-C of Fig. 5.

### EXPLANATION OF THE REFERENCE NUMERALS

10: device for manufacturing float glass, 12: gutter-like body, 14: vessel, 16: molten tin, 18: supply port, 20: molten glass ribbon, 22: edge, 24: bath surface, 26:
recessed portion, 28: inlet, 30: vertical duct, 32: outlet, 34: lateral duct, 36: through hole, 38: circulation duct, 40: linear motor, 41 and 42: control wall

### BEST MODE FOR CARRYING OUT THE INVENTION

Now, the method for manufacturing float glass and a device therefor, according to a preferred embodiment of the present invention will be described in detail, referring to the accompanying drawings.

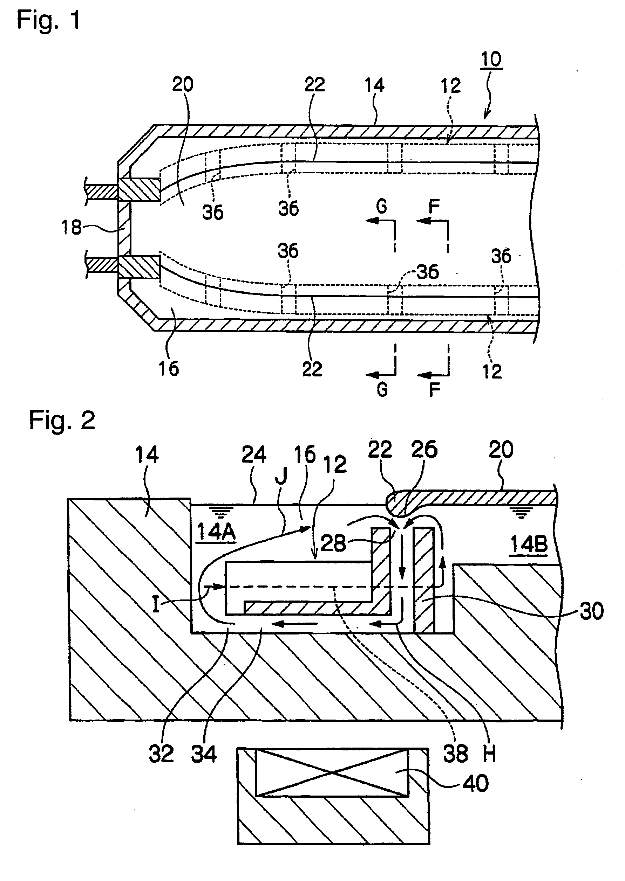

Fig. 1 is a plan view showing the device 10 for manufacturing float glass, which manufactures flat glass for an FPD (Flat Panel Display), in particular a liquid crystal display and the like. The flat glass for an FPD, such as a liquid crystal display, is generally required to have a thickness of from about 0.3 to 1.0 mm and is also required to have a flatness with a high degree of accuracy. The device 10 for manufacturing float glass by use of gutter-like bodies 12 is applied to the device for manufacturing float glass for an FPD. In accordance with the device 10 for manufacturing float glass, it is possible to manufacture flat glass, which satisfies the thickness and the flatness required as flat glass for an FPD.

The gutter-like bodies 12 of the device 10 for manufacturing float glass are disposed in at least a high-temperature zone and a forming zone (having a temperature of from about 930 to 1,300°C and a temperature of from about 800 to 930°C, respectively, in the case of soda lime glass) on an upstream side of a vessel 14. The gutter-like bodies 12 are disposed so as to be immersed in molten tin (molten metal) 16 contained in the vessel 14 and are disposed along both edges 22 and 22 of a molten glass ribbon 20, which is continuously supplied in the vessel from a glass melting furnace through a supply port 18 of the vessel 14. The molten glass ribbon 20 moves forward on a bath surface of the molten tin 16, being pulled toward a lehr (toward the right direction in Fig. 1). Both edges 22 and 22 are held by recessed portions 26 of the bath surface 24 in the high temperature zone and the forming zone of the vessel 14. The molten glass ribbon 20, which has both edges 22 held by the recessed portions 26, is subjected to thickness and width adjustment, and then is forwarded, in a stable way, to a later stage in the vessel to be cooled before being forwarded to the lehr. In this embodiment, the glass comprises, e.g., non-alkali glass or soda lime glass, and the molten tin 16 in the high-temperature zone is heated to, e.g., a temperature of from 1,000 to 1,500°C (for non-alkali glass) or a temperature of from 930 to 1,300°C (for soda lime glass) by an electric heater (not shown).

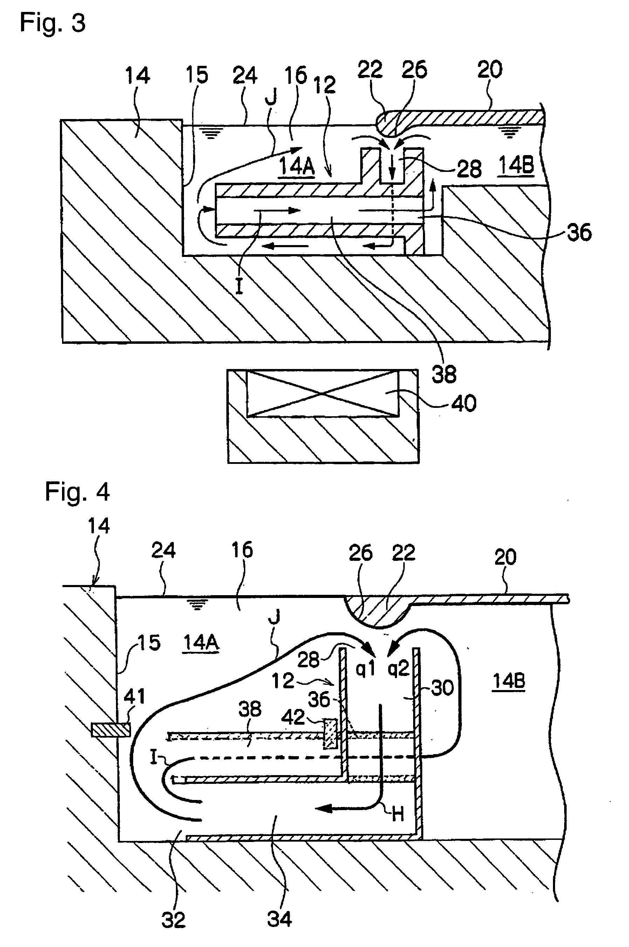

Fig. 2 is a cross-sectional view taken along line F-F of Fig. 1, and Fig. 3 is a cross-sectional view taken along line G-G of Fig. 1. As shown in these figures, each of the gutter-like bodies 12 is formed in a substantially L character shape in section and comprises a vertical duct 30 having an inlet 28, a lateral duct 34 having an outlet 32 (Fig. 2) and circulation ducts 38 defined by through holes 36 formed at a position corresponding to the vertical duct 30 (Fig. 3).

A linear motor 40 is disposed below a bottom portion of the vessel 14 under the lateral duct 34 of each of the gutter-like bodies 12. The linear motor 40 applies a driving force to the molten tin 16 in the lateral duct 34, causing the molten tin 16 to flow in the vertical duct 30 and the lateral duct 34 of each of the gutter-like bodies 12 in a direction indicated by an arrow H.

By this operation, a flow of the molten tin 16 is generated in a direction substantially perpendicular to the bath surface 24 and toward the bottom of the vessel 14 to create a negative pressure under each of the edges 22 of the molten glass ribbon 20. By this negative pressure, the bath surface level of the molten tin 16 in the vicinity of each of the edges 22 is made lower than the bath surface level around each of the edges. Both edges 22 of the molten glass ribbon 20 flow into the recessed portions 26 defined by the lowered portions of the bath surface 24. In this way, both edges 22 of the molten glass ribbon 20 are held by the recessed portions 26. Accordingly, it is possible to make the width of the molten glass ribbon 20 wider and to keep the width wide, which is capable of manufacturing flat glass for an FPD having a smaller thickness than the equilibrium thickness.

The gutter-like bodies 12 may comprise a material less-reactive or unreactive to the molten tin 16 and resistant to high temperatures, examples of which include alumina, sillimanite (fibrolite), brick such as clay brick, and carbon. In this embodiment, the gutter-like bodies 12 are made of carbon since the gutter-like bodies need to be made of a non-magnetic material because of application of a magnetic field to the gutter-like bodies 12 by the linear motor 40 and since the gutter-like bodies need to be easily machined because of having a large size.

The linear motor 40 is advantageous in that it is possible to directly drive the molten tin 16 without contact with the molten tin, and that it is easy to control the flow rate of the molten tin. The linear motor 40 has coils wound on a comb-like primary iron core, and a three phase a.c. voltage is applied to the coil to successively excite the coil, generating a magnetic field traveling in a certain direction. Each linear motor 40 is disposed below the bottom of the vessel with the gutter-like bodies 12 formed therein, such that each linear motor can apply a driving force (tractive force) to the molten tin 16 in the lateral duct 34 of the corresponding gutter-like body 12. By this arrangement, the molten tin 16 in the vertical duct 30 and the lateral duct 34 is flowed toward the closest lateral wall 15 of the vessel 14 from just under the corresponding edge 22 of the molten glass ribbon 20 by the driving force of each linear motor 40 as indicated by an arrow H.

It should be noted that each of the gutter-like bodies 12 according to this embodiment includes the circulation ducts 38 in addition to the vertical duct 30 and the lateral duct 34. Since each of the circulation ducts 38 communicates with a vessel central area 14B below the corresponding edge 22 of the molten glass ribbon 20 through a through hole 36 formed at a position corresponding to the vertical duct 30, the vessel central area 14B communicates with a vessel edge area 14A through the circulation ducts 38 and the through holes 36. By this arrangement, the molten tin 16, which has flowed out of the outlet 32 of the lateral duct 34 and has changed its flow direction by the presence of the lateral wall 15 of the vessel 14 as shown in Fig. 2 and Fig. 3, is partly introduced into the circulation ducts 38 as indicated by an arrow I and is directed to the vessel central area 14B through the through holes 36. The remaining portion of the molten tin 16 flows out into the vessel edge area 14A as indicated by an arrow J and is sucked into the inlet 28 of the vertical duct 30.

The circulation ducts 38 are disposed at certain intervals in the flow direction of the motel glass ribbon 20 as shown in dotted lines in Fig. 1.
The intervals, at which the circulation ducts 38 are disposed, are determined not only so that no turbulence occurs in the molten tin sucked into the inlet 28 of each of the vertical ducts 30, and the shape of the recessed portions 26 is adversely affected, but also so that the flow rates of both flows into the inlet 28 of each of the vertical ducts 30 from each of the vessel edge areas 14A and from the vessel central area 14B are substantially balanced over the entire length of each of the outlets and to be optimum in connection with edge holding. The circulation ducts may be disposed at intervals of from, e.g., 0.3 to 1 mm.

As shown in Fig. 4, a control wall 41 or 42 may be disposed at at least one of a position between each of the gutter-like bodies 12 and each of the lateral walls 15 of the vessel 14 and a position in each of the circulation ducts 38 in order to control the flow rate of the molten tin 16 directed from the outlet 32 of each of the lateral ducts 34 to each of the vessel edge area 14A of the vessel 14 and the flow rate of the molten tin 16 introduced into the circulation ducts 38.

It is possible to control the flow rate of the molten tin 16 by disposing the control walls 41 or 42 as stated above or forming the plural circulation ducts 38 at such certain intervals as stated above. In this way, it is possible to control the flow rate of the molten tin 16 inside and outside of both edges 22 of the molten glass ribbon 20.

The control walls 41 or 42 may comprise baffle plates, rectification plates or other plates that can control the flow rate of the molten tin 16 directed to each of the vessel edge areas 14A and introduce the molten tin 16 into the circulation ducts 38, or can control the flow rate of the molten tin 16 introduced into the circulation ducts 38 and direct the molten tin to each of the vessel edge areas 14A.

The flow rate of the molten tin 16 may be preliminarily controlled and set before running the device for manufacturing float glass or may be controlled and set during manufacture of float glass after running the device for manufacturing float glass.

In accordance with the gutter-like bodies 12 thus constructed, a portion of the molten tin 16, which has flowed into each of the vessel edge areas 14A from the outlet 32 of each of the lateral duct 34 of the gutter-like bodies 12, is directed to the vessel central area 14B through the circulation ducts 38 and the through holes 36 and sucked into the inlet 28 of each of the gutter-like bodies by a suction force generated at the inlet 28. Since the flow rate q1 of the molten tin 16 that flows from each of the vessel edge areas 14A into each of the inlets 28, and the flow rate q2 of the molten tin 16 that flows from the vessel central area 14B into each of the inlets 28 are balanced (Fig. 4) in this way, both the flow rates q1 and q2 are substantially equalized along the forward direction of the molten glass ribbon 20. Accordingly, the recessed portions 26 are substantially uniformly formed on the bath surface 24 in such an appropriate shape to hold the edges over the entire length of the gutter-like bodies 12 and along the forward direction of the molten glass ribbon 20, with the result that the edges 22 can be stably held in the recessed portions 26. As a result, it is possible to manufacture flat glass, which satisfies a required thickness and a required flatness as flat glass for an FPD.

When different temperatures are set in individual blocks in the flow direction of the molten glass ribbon 20, it is possible to keep the temperature distribution constant in each of the blocks to obtain a stable glass quality by disposing at least one circulation duct 38 in each of the gutter-like bodies at a position corresponding to each of the blocks.

Although the gutter-like bodies according to this embodiment have the circulation ducts 38 disposed above the lateral ducts 34, the position where the circulation ducts 38 are disposed is not limited to the position in this embodiment. There is no limitation to the position of the circulation ducts as long as the molten tin 16 that has been returned to the vessel edge areas 14A can be introduced into the vessel central area 14B.

The entire disclosure of Japanese Patent Application No. 2004-068557 (filed on March 11, 2004) including specification, claims, drawings and summary is incorporated herein by reference in its entirety.

## Claims

1. A method for manufacturing float glass, comprising continuously supplying molten glass on a bath surface of molten metal to form a molten glass ribbon, causing the molten glass ribbon to move forward to form flat glass having a target thickness, sucking the molten metal in a substantially vertical direction along edges of the molten glass ribbon to form recessed portions on the bath surface, and carrying out the flat glass formation with the edges being flowed into and held in the recessed portions;
the method further comprising carrying out the flat glass formation while a portion of the molten metal, which is sucked in the substantially vertical direction, is caused to flow out in directions outside and inside the edges of the molten glass ribbon.

2. The method according to Claim 1, wherein the outflows of the molten metal in the directions outside and inside the edges of the molten glass ribbon are controlled so that the flow rates of the molten metal sucked from outside and inside the edges of the molten glass ribbon are substantially equalized in the recessed portions of the molten metal formed on the bath surface along the edges of the molten glass ribbon.

3. A device for manufacturing float glass, wherein molten glass is continuously supplied on a bath surface of molten metal contained in a vessel to form a molten glass ribbon, and the molten glass ribbon is caused to move forward to form flat glass having a target thickness, comprising gutter-like bodies, which are disposed in the vessel, and each of which includes a vertical duct for sucking the molten metal in a substantially vertical direction along an edge of the molten glass ribbon, and a lateral duct for flowing out the molten metal sucked from the vertical duct, in a direction horizontally extending outside the edge of the molten glass ribbon;
each of the gutter-like bodies having a circulation duct formed therein so that a portion of the molten metal that flows out of the lateral duct is directed in a direction remote from the lateral duct and inside the edge of the molten glass ribbon.

4. The device according to Claim 3, wherein the circulation duct formed in each of the gutter-like bodies is disposed at plural positions at certain intervals in a forward direction of the molten glass.ribbon at least on an upstream side of the vessel.

5. The device according to Claim 3 or 4, wherein
a control wall is disposed at at least one of a position between each of the gutter-like bodies and each of the lateral walls of the vessel and a position in the circulation duct in order to control the flow rate of the molten tin directed from an outlet of each of the lateral ducts to each of vessel edge areas of the vessel and the flow rate of the molten tin introduced into the circulation duct.
